# EUROPEAN PATENT APPLICATION

(11) **EP 2 826 996 A1**
(43) Date of publication of application: **21.01.2015**
(21) Application number: 14176341.7
(22) Date of filing: 09.07.2014
(51) Int. Cl.: F04B 17/06

(54) **Drill pump with fixed position bushing**

(30) Priority: 15.07.2013 US 201361846136 P; 03.07.2014 US 201414323031
(71) Applicant: Nomis LLC, Palatine, IL 60067 (US)
(72) Inventor: Larson, David Aaron, ST. CHARLES, IL Illinois 60175 (US)
(74) Representative: Gevers Patents

(57) **Abstract**

A drill powered pump is provided. The pump includes a housing, an impeller mounted within the housing and a pair of bushings that support opposite ends of the support shaft of the impeller. The bushings are carried by the housing. Anti-rotation arrangements are provided to prevent rotation of the bushings relative to the housing.

## Description

### CROSS-REFERENCE TO RELATED PATENT APPLICATIONS

This patent application claims the benefit of U.S. Provisional Patent Application No. 61/846,136, filed July 15, 2013, the entire teachings and disclosure of which are incorporated herein by reference thereto.

### FIELD OF THE INVENTION

This invention generally relates to fluid pumps and particularly to pumps that are able to be driven by a handheld drill.

### BACKGROUND OF THE INVENTION

Pumps are used to pump fluids from one location to another. One type of pump that has been developed is a drill powered pump (also referred to as a drill pump) that has an input shaft that can be engaged by the chuck of a drill for powering the drill pump. Typically, the input shaft is connected to an impeller that performs the pumping operation.

These pumps are typically very cheap. As such, the input shaft that supports the impeller is typically either directly rotationally supported by the housing of the drill pump on opposite sides of the vanes of the impeller or in bushings that are press fit into mounting cavities in the housing.

Unfortunately, both of these methods of rotationally supporting the support provide problems. When the shaft is directly supported by the housing, the rotation of the shaft creates heat which can warp the housing and also causes wears on the housing. Press-fitting bushings in cavities in the housing require much higher tolerances, extends assembly time, and makes the pumps much more difficult to clean/repair.

The invention provides improvements over the current state of the art.

### BRIEF SUMMARY OF THE INVENTION

An embodiment of a new and improved drill powered pump (i.e. drill pump) is provided. In one embodiment, the new and improved drill pump includes an impeller, a housing, first and second bushings and first and second anti-rotation arrangements. The impeller has a support shaft that defines a rotational axis. The housing defines an impeller cavity in which the impeller is mounted. The housing defines an inlet and an outlet that fluidly communicates with the impeller cavity. The housing has a first housing portion and a second housing portion. The second housing portion is operably secured to the first housing portion to form the impeller cavity therebetween. The first bushing is carried by the first housing portion and rotationally supports a first end of the support shaft. The second bushing is carried by the second housing portion and rotationally supports a second end of the support shaft. The first anti-rotation arrangement is between the first bushing and the first housing portion and prevents rotation of the first bushing relative to the first housing portion. The second anti-rotation arrangement is between the second bushing and the second housing portion and prevents rotation of the second bushing relative to the second housing.

In one embodiment, the first and second anti-rotation arrangements rely on mechanical interference to prevent rotation (not frictional engagement).

In one embodiment, the first and second anti-rotation arrangements are not the result of a friction fit (i.e. press fit) between the first bushing and the first housing portion and between the second bushing and the second housing portion.

In one embodiment, the first housing portion defines a first bushing carrying cavity. The first bushing is carried within the first bushing carrying cavity of the first housing portion. The first bushing carrying cavity has a non-circular inner periphery that cooperates with a corresponding portion of the first bushing to prevent rotation of the first bushing. The second housing portion defines a second bushing carrying cavity. The second bushing is carried within the second bushing carrying cavity of the second housing portion. The second bushing carrying cavity has a non-circular inner periphery that cooperates with a corresponding portion of the second bushing to prevent rotation of the second bushing.

In one embodiment, the first anti rotation arrangement includes a slot provided by one of the first bushing or the first housing and a key that extends into the slot that is provided by the other one of the first housing or first bushing. The second anti rotation arrangement includes a slot provided by one of the second bushing or the second housing and a key that extends into the slot that is provided by the other one of the second housing or second bushing.

In one embodiment, the first bushing has a non-continuous cylindrical outer periphery and the first housing includes a key that extends into engagement with the non-continuous outer periphery of the first bushing to prevent rotation therebetween. The second bushing has a non-continuous cylindrical outer periphery and the second housing includes a key that extends into engagement with the non-continuous outer periphery of the second bushing to prevent rotation therebetween.

In one embodiment, the first and second bushings are rotation symmetric and include a central hub and a plurality of spokes that extend radially outward therefrom and define slots or grooves between adjacent spokes.

A method of forming a drill pump is also provided. The method includes carrying the first bushing with a first housing portion such that the first bushing cannot rotate relative to the first housing portion due to an anti-rotation arrangement therebetween; carrying a second bushing with a second housing portion such that the second bushing cannot rotate relative to the second housing portion due to an anti-rotation arrangement therebetween; mounting an impeller to the first and second bushings for rotation; connecting the first and second housing portions to form an internal cavity in which the impeller is mounted, the internal cavity being in fluid communication with an inlet port and an outlet port such.

In one embodiment, the steps of carrying the first and second bushings include inserting a key of each of the anti-rotation arrangements into a groove of each of the anti-rotation arrangements.

In one embodiment, the key of each anti-rotation arrangement is provided by the housing portions and the groove is provided by the bushings.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective illustration of a drill powered pump according to an embodiment of the present invention;
FIG. 2 is a partial cross-sectional illustration of the pump of FIG. 1 with the impeller and impeller support/input shaft removed;
FIG. 3 is a simplified partial cross-sectional illustration of the pump of FIG. 1;
FIG. 4 is a partial cross-sectional illustration of the housing of the pump of FIG. 1 with the bushings and impeller removed;
FIG. 5 illustrates one of the housing portions of the pump of FIG. 1;
FIG. 6 is an enlarged illustration of the housing portion of FIG. 5 with a bushing carried thereby;
FIG. 7 illustrates one of the housing portions of the pump of FIG. 1;
FIG. 8 is an enlarged illustration of the housing portion of FIG. 7 with a bushing carried thereby; and
FIG. 9 illustrates a bushing of the pump of FIG. 1; and
FIGS. 10 and 11 illustrate the drill pump in an exploded view.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

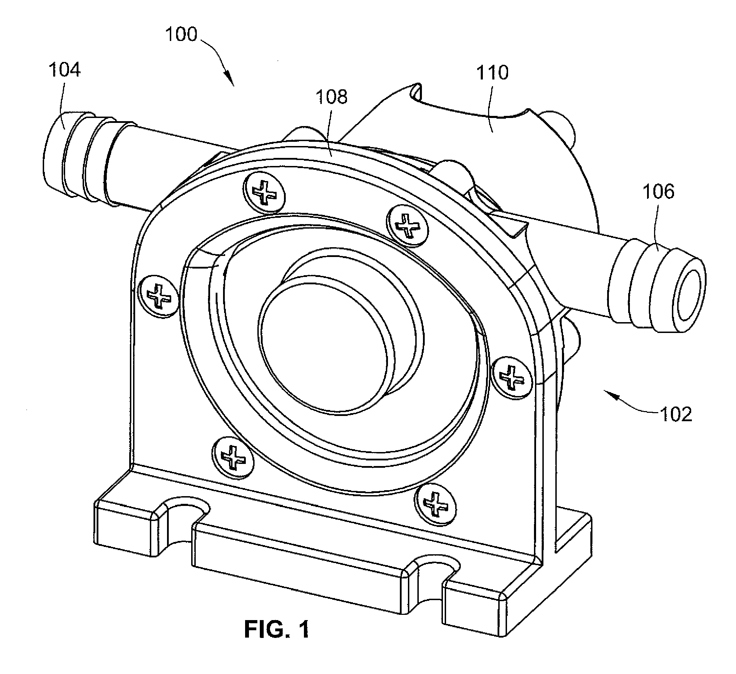

FIG. 1 illustrates a drill powered pump 100 (also referred to as a drill pump 100) according to an embodiment of the present invention. The drill pump 100 can be powered by a drill and used to pump fluids from one place to another. The drill pump 100 generally includes an outer housing 102 that defines inlet and outlet ports 104, 106 which can be connected to hoses (not shown) through which the fluid will be pumped. In the illustrated embodiments, the inlet and outlet ports 104, 106 have barbed connections. However in alternative embodiments, the inlet and outlet ports 104, 106 could be smooth or threaded.

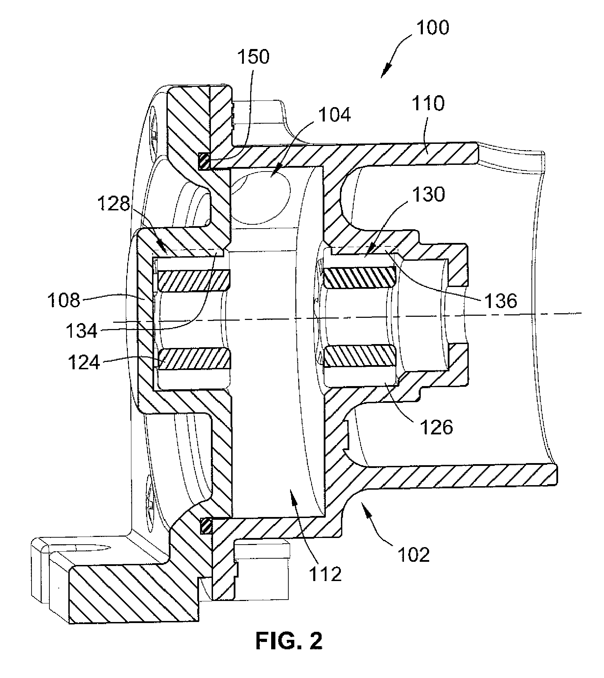

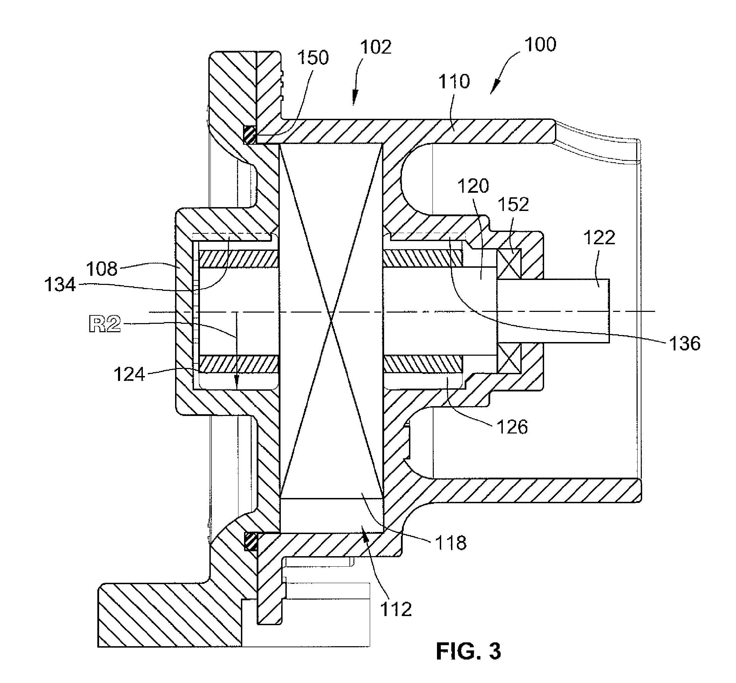

The housing 102 includes first and second housing portions 108, 110 that define an internal cavity 112 that is in fluid communication with the inlet and outlet ports 104, 106 (see also FIG. 2). With reference to FIG. 3, an impeller 118 is mounted within the housing 102 and particularly within internal cavity 112. The impeller is mounted to an input shaft 120 that includes an input end 122 that extends outward from the housing 102 and is preferably configured to be chuckable, e.g. engaged by the chuck of a drill, such that a drill can be used to power the impeller 118 within the cavity 112.

The input shaft 120 is rotatably supported relative to housing 102 by a pair of bushings 124, 126 on opposite sides of the impeller and proximate opposite ends of the input shaft 120. The bushings 124, 126 are carried within corresponding bushing carrying cavities, 128, 130, respectively, formed in the first and second housing portions 108, 110.

The bushings 124, 126 and corresponding housing portions 108, 110, have an anti-rotation arrangement formed therebetween to prevent rotation of the bushings 124, 126 during operation of the drill pump 100. In the illustrated embodiment, the anti-rotation arrangement is in the form of a key and slot that provides mechanical interference (not frictional interference) that inhibits rotation of the bushings 108, 110.

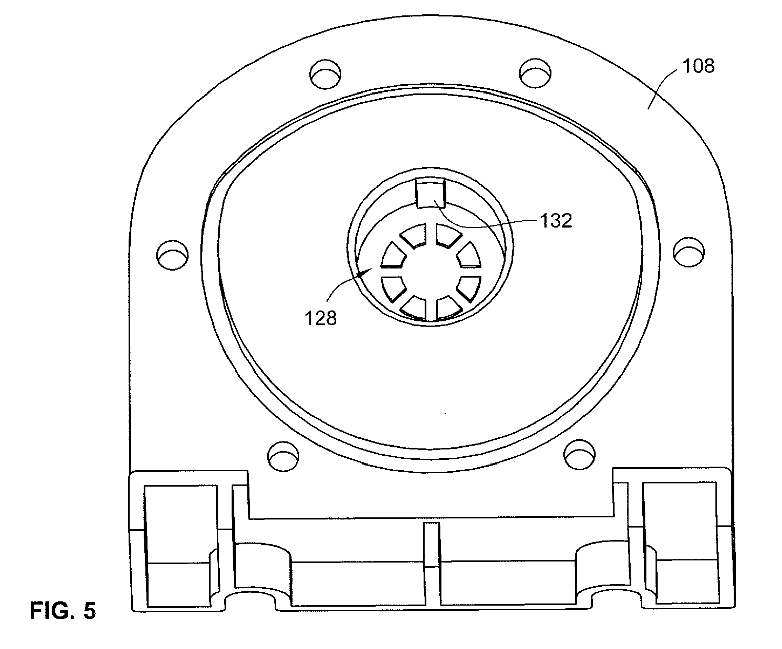

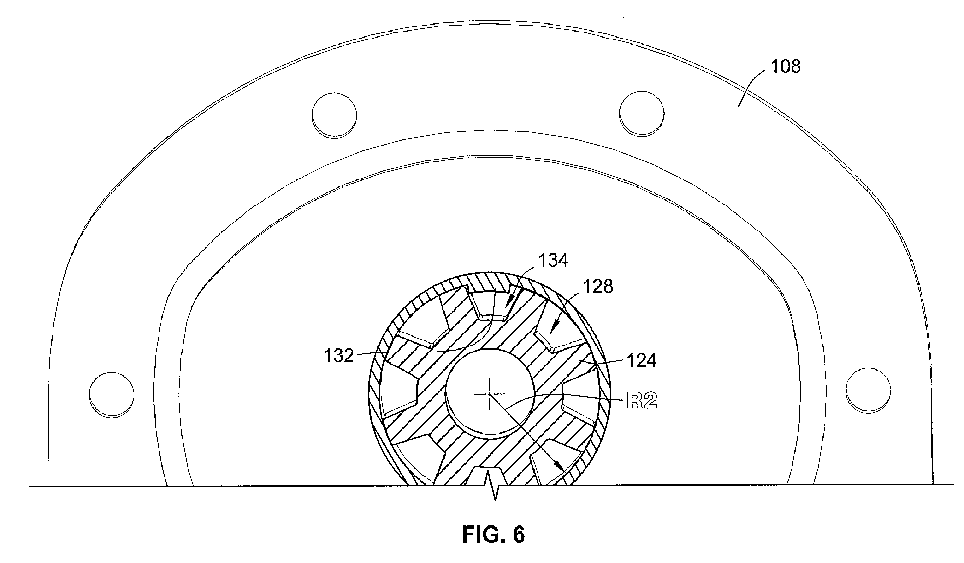

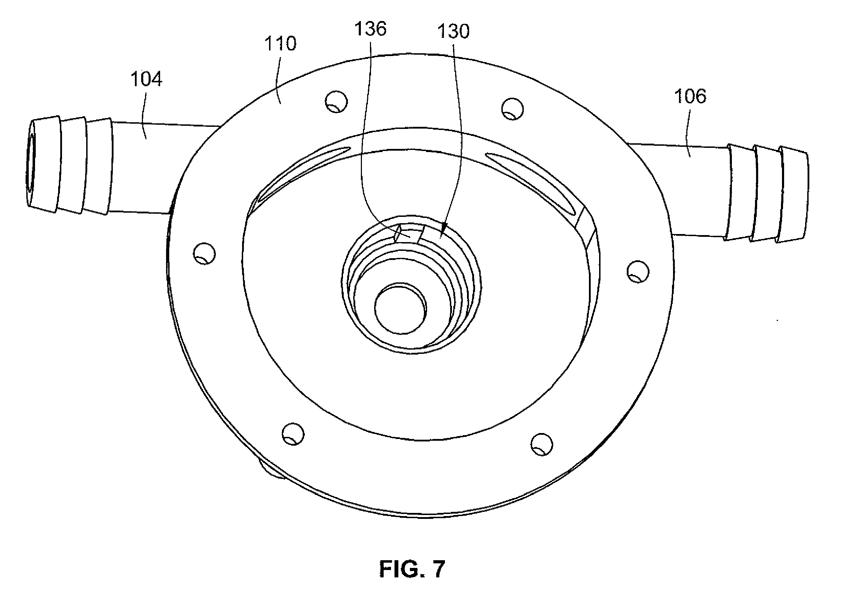

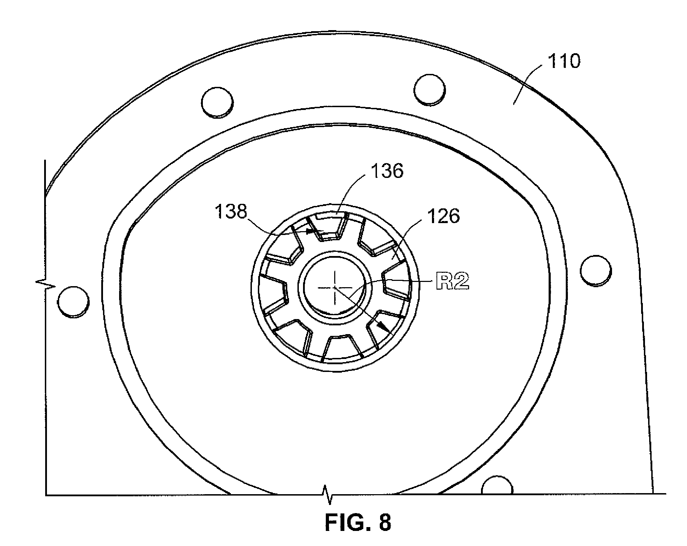

As illustrated in FIGS. 5 and 6, the bushing carrying cavity 128 of first housing portion 108 includes a radially inward projecting projection in the form of key 132. The key 132 extends radially into a groove 134 formed into bushing 124. Similarly, as illustrated in FIGS. 7 and 8, the bushing carrying cavity 130 of second housing portion 110 includes a radially inward projecting projection in the form of key 136. The key 136 extends radially into a groove 138 formed into bushing 126.

The angular engagement between the bushings 124, 126 and keys 132, 136 prevents angular rotation of the bushings 124, 126 when the input shaft 120 is rotated to drive impeller 118.

While the illustrated embodiment uses a projection or key on the housing portions and grooves in the outer periphery of the bushings, this arrangement could be switched such that the grooves are formed in the housing portions and the keys are formed on the bushings and extend radially outward and into the grooves of the housing portions. Further, other anti-rotation arrangements could be provided. For instance, the bushing carrying cavities could have non-round inner periphery and the bushings could have an outer periphery with a corresponding non-round shape. The cavities could include a flat surface and the bushings could have a corresponding flat on the outer periphery thereof to prevent rotation of the bushings. For instance, the bushings could have a rectangular outer periphery that is sized and shaped to correspond with a rectangular inner periphery of the bushing carrying cavities.

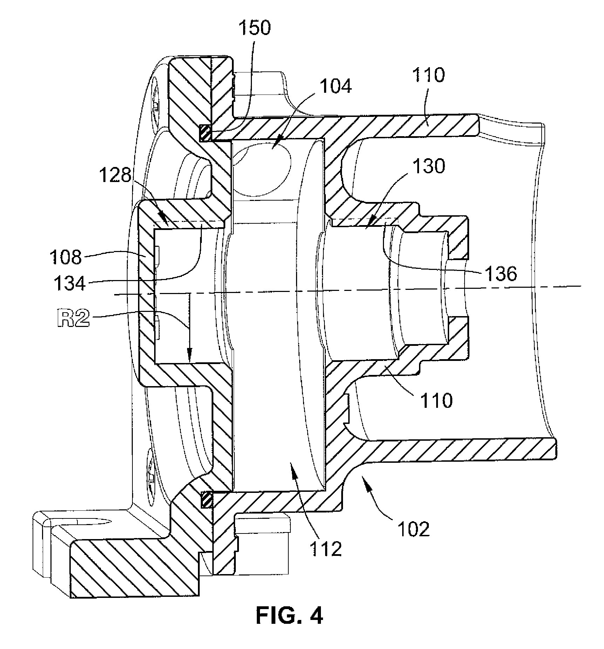

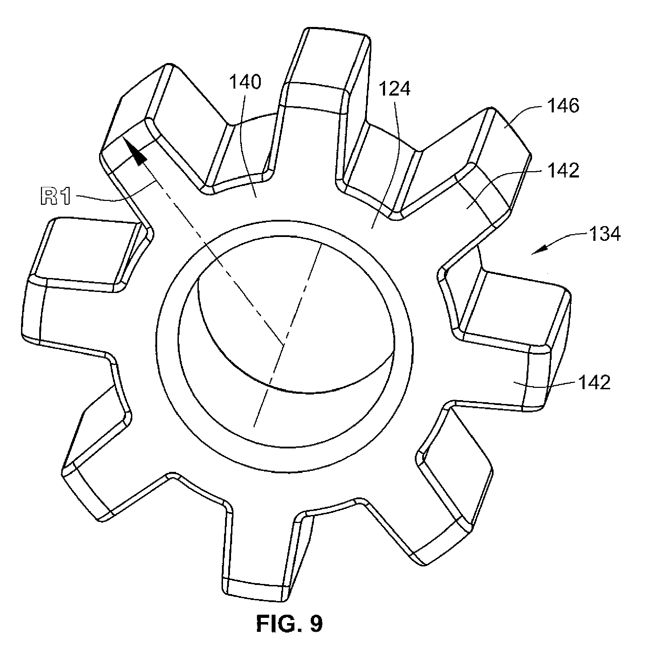

With reference to FIG. 9, bushing 124, which is identical to bushing 126, is illustrated. Bushing 124 is generally rotation symmetric and includes a central hub portion 140 from which a plurality of angularly spaced apart spokes 142 extend. By being rotation symmetric, assembly is easily facilitated. A plurality of grooves 134 are formed between the spokes 142. The distal ends 146 of the spokes 142 generally define a discontinuous cylindrical outer periphery for bushing 124. The radius R1 of the discontinuous outer periphery for bushing 124 is closely sized to the inner radius R2 of the corresponding bushing carrying cavity 128 of housing portion 108 (see also FIG. 4).

However, because this arrangement does not rely on a friction fit between the bushing 124 and housing portion 108 to prevent rotation between the components, the tolerances of R1 and R2 need not be as great as in prior drill pumps. Further, because there is no need to press fit the bushing 124 within the housing portion 108, assembly time can be accelerated. Additionally, because the input shaft 120 does not rotate on the housing 102 directly nor do the bushings rotate relative to the housing 102, wear of the mating components is reduced. Further, the only wear occurs on the bushing which can be easily and cheaply replaced.

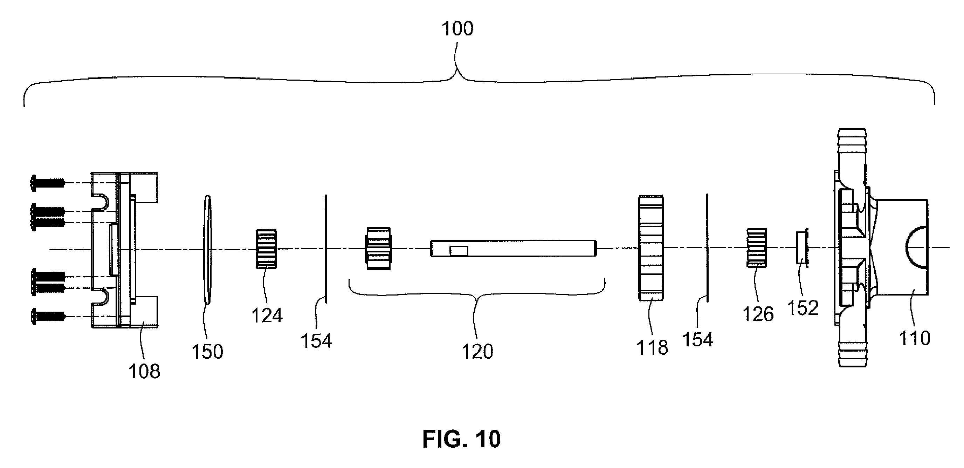

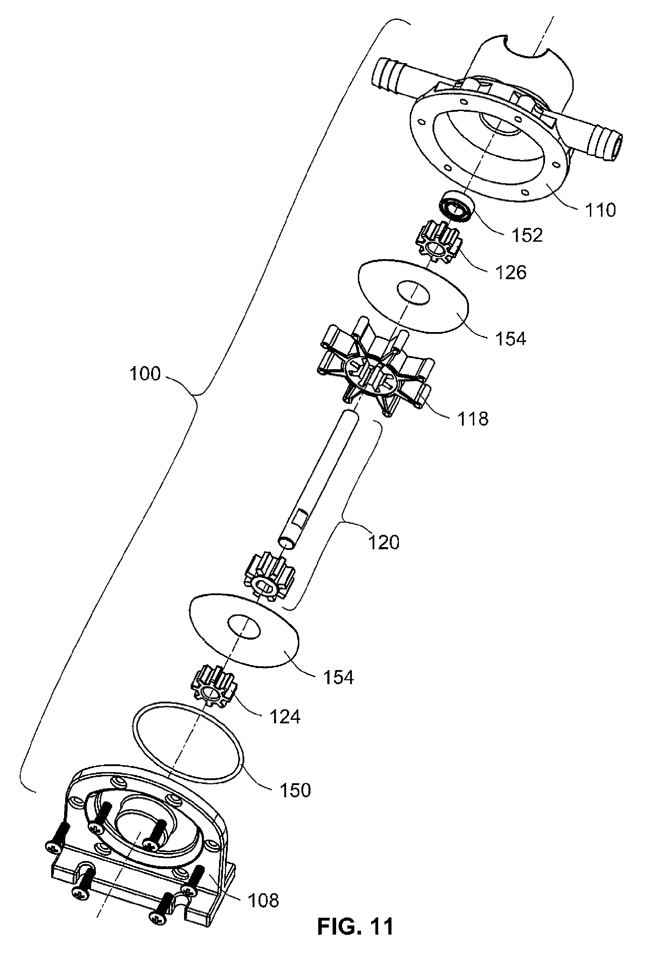

FIGS. 10 and 11 illustrate the drill pump 100 in exploded view. These figures also illustrate housing seal 150 that is placed between the first and second housing portions 108, 110 to prevent leakage from the housing. Also, a second seal in the form of input shaft seal 152 is illustrated. Input shaft seal 152 seals around the outer periphery of input shaft 120 and within second housing portion 110 to prevent leakage.

The drill pump 100 includes a pair of impeller seals 154 that help improve the seal between the impeller 118 and the housing portions 108, 110.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A drill pump comprising:
a. an impeller having a support shaft that defines a rotational axis;
b. a housing defining an impeller cavity in which the impeller is mounted, the housing defining an inlet and an outlet that fluidly communicates with the impeller cavity, the housing having a first housing portion and a second housing portion, the second housing portion operably securable to the first housing portion to form the impeller cavity therebetween;
c. a first bushing carried by the first housing portion supporting a first end of the support shaft;
d. a second bushing carried by the second housing portion supporting a second end of the support shaft;
e. a first anti-rotation arrangement between the first bushing and the first housing portion to prevent rotation of the first bushing relative to the first housing portion;
f. a second anti-rotation arrangement between the second bushing and the second housing portion to prevent rotation of the second bushing relative to the second housing portion.

2. The drill pump of claim 1, wherein the first and second anti-rotation arrangements rely on mechanical interference to prevent rotation.

3. The drill pump of claim 1 or 2, wherein the first and second anti-rotation arrangement are not the result of a friction fit between the first bushing and the first housing portion and between the second bushing and the second housing portion.

4. The drill pump of anyone of the preceding claims, wherein the first housing portion defines a first bushing carrying cavity, the first bushing being carried within the first bushing carrying cavity of the first housing portion, the first bushing carrying cavity having a non-circular inner periphery that cooperates with a corresponding portion of the first bushing to prevent rotation of the first bushing; wherein second housing portion defines a second bushing carrying cavity, the second bushing being carried within the second bushing carrying cavity of the second housing portion, the second bushing carrying cavity having a non-circular inner periphery that cooperates with a corresponding portion of the second bushing to prevent rotation of the second bushing.

5. The drill pump of any one of the preceding claims, wherein the first anti rotation arrangement includes a slot provided by one of the first bushing or the first housing and a key that extends into the slot that is provided by the other one of the first housing or first bushing; the second anti rotation arrangement includes a slot provided by one of the second bushing or the second housing and a key that extends into the slot that is provided by the other one of the second housing or second bushing.

6. The drill pump of any one of the preceding claims, wherein the first bushing has a non-continuous cylindrical outer periphery and the first housing includes a key that extends into engagement with the non-continuous outer periphery of the first bushing to prevent rotation therebetween; and the second bushing has a non-continuous cylindrical outer periphery and the second housing includes a key that extends into engagement with the non-continuous outer periphery of the second bushing to prevent rotation therebetween.

7. The drill pump of claim 6, wherein the first and second bushings are rotation symmetric and include a central hub and a plurality of spokes that extend radially outward therebetween and define slots between adjacent spokes.

8. A method of forming a drill pump comprising:
a. carrying first bushing with a first housing portion such that the first bushing cannot rotate relative to the first housing portion due to an anti-rotation arrangement therebetween;
b. carrying a second bushing to a second housing portion such that the second bushing cannot rotate relative to the second housing portion due to an anti-rotation arrangement therebetween;
c. mounting an impeller to the first and second bushings for rotation;
d. connecting the first and second housing portions to form an internal cavity in which the impeller is mounted, the internal cavity being in fluid communication with an inlet port and an outlet port such.

9. The method of claim 8, wherein the steps of carrying the first and second bushings includes inserting a key of each of the anti-rotation arrangements into a groove of each of the anti-rotation arrangements.

10. The method of claim 9, wherein the key of each anti-rotation arrangement is provided by the housing portions and the groove is provided by the bushings.
